# EUROPEAN PATENT SPECIFICATION

(11) **EP 3 091 848 B1**
(45) Date of publication and mention of the grant of the patent: **29.07.2020**
(21) Application number: 14828535.6
(22) Date of filing: 19.12.2014
(51) Int. Cl.: A23G 9/08, A23G 9/20, A23G 9/28, A23G 9/50, B65D 85/804

(54) **MACHINE FOR THE PREPARATION OF ICE CREAM**
MASCHINE ZUR HERSTELLUNG VON EISCREME
MACHINE POUR LA PRÉPARATION DE CRÈME GLACÉE

(30) Priority: 07.01.2014 IT MO20140003
(43) Date of publication of application: 16.11.2016
(73) Proprietor: Sighinolfi Meccanica S.r.l., 41058 Vignola (MO) (IT)
(72) Inventor: SIGHINOLFI, Andrea, 41058 Vignola (IT)
(74) Representative: Brunacci, Marco
(86) International application number: PCT/IB2014/067111
(87) International publication number: WO 2015/104610

(56) References cited:
- EP-A1- 2 401 945
- WO-A1-94/04046
- WO-A1-2012/160532
- US-A- 4 022 031
- US-A- 5 114 045

## Description

### Technical Field

The present invention relates to a machine to prepare and dispense ice-cream.

### Background Art

Machines are known for producing ice-cream, present both in ice-cream parlours and in cafes or kiosks or other public premises.

One type of these machines is designed to dispense whipped ice-cream, so-called "American" or "soft ice-cream", as it will be called hereunder.

Some of these machines produce ice-cream starting from specific bases made up of semi-finished products in the form of soluble powder mixes.

To the preparations, water is added to obtain a mix which, after a cooling phase, becomes ice-cream.

Other machines produce ice-cream imitating the artisan process, i.e., by mixing, by means of stirrers, ingredients such as milk and fruit, until the mix to be cooled is obtained.

In both cases, these machines internally include a number of trays to contain the preparations or the ingredients of different flavour in sufficient quantity to be able to perform a multiplicity of dispensing operations.

The dispensing operations occur by means of a plurality of nozzles, including a nozzle for each flavour and at least another nozzle for dispensing two-flavour ice-cream (or three flavour or variegated, etc.).

The known machines are cumbersome and require fairly demanding operation. In fact, having to contain the various trays for the various flavours and having to accommodate the respective circuits that terminate in the numerous nozzles, the known machines are necessarily voluminous.

Furthermore, it has been verified that, after seventy-two hours from inserting the ingredients or the preparations in the trays, pathogenic agents could form in these.

Consequently, considering that in such period, it is not certain that the trays are necessarily fully emptied, the known machines must be equipped with a pasteurization system, which is programmed to start during the night hours.

Clearly, this represents a complication and a cost.

Furthermore, always to avoid health risks, ice-cream machines have to be frequently cleaned and this, in view of the number of trays and the complexity of known machines, is an inconvenient and time-consuming operation.

Another particularly critical drawback consists in the fact that known machines are only partially able to satisfy customers.

The reason is that the ice-cream which known machines can offer the consumer at any given time can only have a limited number of flavours.

In fact, for each flavour a tray and one or more dispensing nozzles must be provided and, consequently, the number of ice-cream variations that an ice-cream maker or café can offer customers by means of the known machines is very limited.

Some types of apparatuses and devices for preparing food products are disclosed in the patent documents WO2012/160532A1 and EP2401945A1.

### Description of the Invention

The main aim of the present invention is to provide a machine for the preparation and dispensing of ice-cream or similar foodstuffs that allows to vary the flavour of the ice-cream at each dispensing operation.

Within this aim, an object of the invention is to provide a machine for the preparation and dispensing of ice-cream which is compact, easy to maintain and which, therefore, can be employed in the domestic environment, as well as in commercial premises.

Another object of the present invention is to provide a machine for the preparation and dispensing of ice-cream which allows to overcome the mentioned drawbacks of the prior art within the ambit of a simple, rational, easy and effective to use as well as affordable solution.

The above mentioned objects are achieved by the machine for the preparation and dispensing of ice-cream, made in accordance with claim 1 and by the capsule for the preparation of ice-cream, made in accordance with claim 12.

### Brief Description of the Drawings

Other characteristics and advantages of the present invention will become better evident from the description of several preferred but not exclusive embodiments of a machine and a capsule for the preparation of ice-cream, illustrated by way of an indicative but non-limitative example in the accompanying drawings, in which:
Figure 1 is an axonometric view of the machine according to the invention, in which a broken section is represented through which a schematic representation can be seen of the capsule according to the invention, contained in a suitable seat included in the machine itself;
Figure 2 is an axonometric view of the body of the capsule according to the invention, empty and devoid of a sealing film or the like;
Figure 3 is a diagram of the fluid-dynamic circuit for the preparation of the ice-cream of the machine according to the invention;
Figure 4 is a schematic longitudinal section of a portion of the circuit of the previous figure, in a particular embodiment of the machine according to the invention; and
Figure 5 is a diagram of the dispensing section of the circuit in Figure 3, in a possible embodiment of the machine according to the invention.

### Embodiments of the Invention

With reference to these illustrations, with reference numeral 1 is globally designated a machine for the preparation and dispensing of ice-cream and with reference numeral 2 a capsule to be used with the machine 1 for the preparation of ice-cream.

The invention has been conceived to make available an express ice-cream machine 1, i.e., to make express ice-cream in an automatic way.

The capsules 2 make up the consumables for the machine 1, and contain one or more doses of soluble preparation for ice-cream, e.g., of the powdered type.

It is clear that when the term "soluble" is used in the present description with reference to the preparation, it is meant that at least a part of this is soluble in water (or milk) and that there may be another part mixable but not soluble; soluble preparations are in fact in themselves known in the art and it is not necessary here to go into any further details as regards their chemical characteristics.

It is specified that the intended use of machine 1 for the production of ice-cream must not be taken in a limitative sense because the machine 1 can be used to produce foodstuffs similar to ice-cream, first and foremost soft ice-cream, but also yogurt ice-cream ("frozen yogurt"), sorbets, mousses, shakes, etc...

For simplicity of explanation, herein below we shall refer to the purely exemplary case of a machine 1 and of a capsule 2 designed for the production of soft ice-cream.

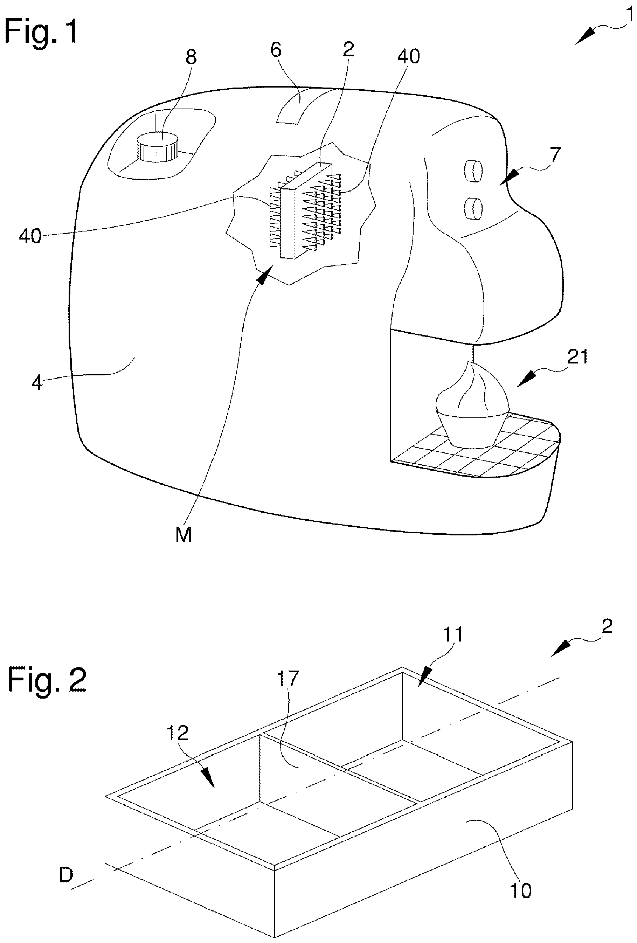

As shown in figure 1, the machine 1 can comprise a containment casing 4, which can be equipped with an inlet 6 for the capsule 2, and interfacing means 7, like buttons or the like, for the control of the operation of the machine 1 itself by the user.

In fact, preferably, within such casing 4 a control logic is included for controlling the operation of the machine 1, connected to the interfacing means 7, which can include a microprocessor or similar devices.

The machine 1, in its more general aspects, comprises first of all a fluid-dynamic circuit 3 suitable for the preparation of ice-cream, which can be completely contained in the casing 4.

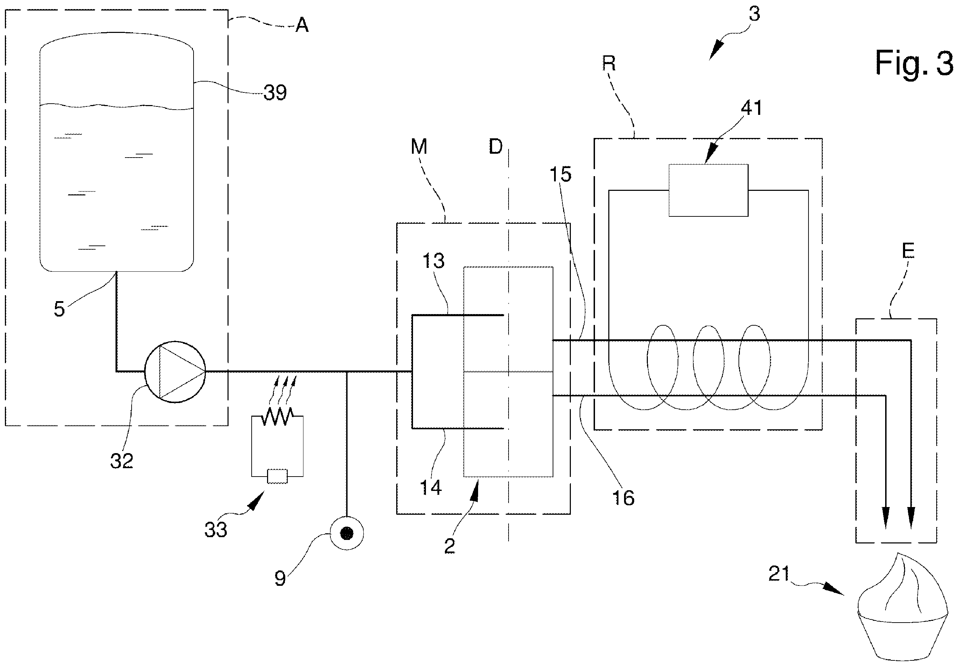

The circuit 3, whose diagram is shown in figure 3, originates from or at least passes first of all through a supply station A of the machine 1, in which there is an access 5 for water.

Such access 5 can be in communication with a tank 39, included in the machine 1, preferably included within the casing 4 and having a cap 8 for closing one of its filling openings.

Alternatively, the access 5 can be connected to the water mains.

The water supplied to the circuit 3 can be e.g. at room temperature.

The circuit 3 includes a pump 32, arranged downstream of said access 5 and preferably in the supply station A, to move the fluid that flows in the circuit 3.

The term fluid used here can refer to the water or to the mix of water and preparation obtained in ways explained afterwards.

If the pump 32 is arranged in a section of the circuit 3 downstream of the mix formation, it can be of the peristaltic type.

Furthermore, the expression fluid also re-comprises the fluid substance that forms when gas, such as air or carbon dioxide or other gas suitable for the purpose, is added to the water or above-mentioned mix.

In fact, the soft ice-cream is an emulsion which comprises a very high part share of air and, consequently, in the preferred embodiment of the invention, the circuit 3 comprises an inlet 9 for the gas, in communication with a source of air or CO2 or other gas.

The gas inlet 9 can e.g. be arranged in the supply station A itself or also downstream of this, according to particular construction choices.

Downstream of said supply station A, the machine 1 includes a mixing station M, wherein is at least a seat to receive the capsule 2.

The seat is part of the circuit 3 or at least it is suitable for being placed in fluid-dynamic communication with the circuit 3 itself.

In practice, the circuit 3 passes through the mixing station M, where the fluid contained in it mixes with and dissolves the preparation, as will be better detailed at the time of describing the operation of the invention.

Preferably, the seat is accessible from the outside of the machine 1, e.g., by means of the above-mentioned inlet 6 of the capsule 2, for the purpose of its manual fitting.

The seat can also be accessible on the outside thanks to the fact of providing a removable portion of the casing 4, which allows fitting the capsule 2 in the seat, obtained either in the removable portion itself or in the remaining part of the machine 1.

In one of the embodiments of the invention, the seat can be defined substantially by a chamber inside the machine 1, wherein the capsule 2 is housed, which chamber has one or more accesses for the water inlet (wherein the gas may possibly be dissolved) and one or more outlets for the mix.

These accesses and outlets are in fluid-dynamic communication with the ducts of the circuit 3 from which arrives the fluid coming from the stations upstream of the mixing station and from which the mix comes out.

The invention also provides for a different embodiment, conceived to exploit the Venturi effect, which will be subsequently explained.

The capsule 2 can comprise permeable portions of its walls, suitable for allowing water to flow through.

In practice, in this case, the water passes through the capsule 2 contained in the seat, from one side to another, dissolving the preparation and bringing it out of the capsule 2 in the form of mix, so as to supply the latter downstream of the mixing station M.

Alternatively, the capsule 2 is provided with completely impermeable walls, to both air and water, completely seal closed, and it is not therefore necessary to pack it in an outer wrapping for the purpose of offering it to the public.

In this case, the capsule 2 can have walls in breakable material such as polypropylene (or other plastic material) and/or aluminium.

In detail, see figure 3, the capsule 2 can be formed of a body 10, preferably in plastic material, the walls of which define one (or more) internal compartments 11, 12 to contain the doses of preparation, closed by a film, e.g. in aluminium. The body 10 can have side walls making up the perimeter frame of the capsule 2, which can be polygonal or curved, and a bottom common to the compartments 11, 12.

The capsule 2 has breakable walls and includes perforation means 40 to break them, once the capsule 2 has been received in the seat.

The perforation means 40 can comprise pointed elements, as shown in a stylized way in figure 1, present in the seat or suitable for being introduced in the seat following the reception of the capsule 2 to be broken.

This can occur at the operation of the above-mentioned control logic, if fitted, or by means of a lever mechanism which can be operated manually by the user.

Clearly, the breaking of the capsule 2 allows placing in communication its inside, where the preparation is, with the fluid flowing in the ducts of the circuit 3 for the purpose of creating the mix.

If this occurs in the above-mentioned chamber, which can also be literally flooded by the supply fluid, then the chamber is to all effects part of the circuit 3 of the invention.

Preferably, at the time of mixing, the seat and the ducts of the circuit 3 are in communication with each other but sealed to the outside.

The circuit 3 can comprise branches.

In detail, in the preferred embodiment of the invention, the circuit 3 includes a plurality of preparation branches 13, 14, 15, 16 that pass through the mixing station M, which can make up the above-mentioned ducts.

The branch point can be included in the mixing station M or be situated upstream of this.

The function of the branches 13, 14, 15, 16 of the circuit 3 is tied to the fact that the capsule 2, according to a preferred solution, has a plurality of said compartments 11, 12 (figure 2 shows two of them by way of example), each containing a different preparation.

The different preparations are suitable for individually obtaining an ice-cream having a flavour different from that obtained by the preparations of the other compartments 11, 12.

The compartments 11, 12 can be defined by one or more partition walls 17 provided inside the capsule 2.

The preparation branches 13, 14, 15, 16 of the circuit 3 have been devised so as to be able to communicate with a respective compartment of the capsule 2 fitted in the seat.

To achieve this, it can be foreseen that, when the capsule 2 is in the seat, each compartment 11, 12 is positioned in a different part of the seat itself.

In this case, the different branches 13, 14, 15, 16 communicate with a respective different part of the seat and, consequently, with a different compartment 11, 12 of the capsule 2.

In practice, the partition walls 17 cooperate with the branches 13, 14, 15, 16 to define two distinct fluid-dynamic paths for the preparation of the ice-cream mixes with different flavours and their transport along the circuit 3, as far as dispensing outside the machine 1 (about which we shall speak later).

This enables the machine 1 to be able to dispense, at the same time, ice-cream with a plurality of flavours, i.e., different doses of ice-cream, each having a different flavour, or to be able to dispense ice-cream with two flavours, three flavours, etc..

It will be noticed that, thanks to the advantageous and synergic combination between the proposed machine 1 and capsule 2, not only can the invention do without the trays of prior art, which make the relative machines cumbersome and make their construction complicated, but also enables consumers/users to be able to choose, at each dispensing operation, among an indefinite number of different ice-cream flavours.

In practice, these characteristics of the invention make it possible to obtain express ice-cream in a multiplicity of flavours, as many as are the existing preparations that can be inserted in doses of the respective capsules 2, the choice of flavour also being made possible at the time the ice-cream is prepared and dispensed.

Even more in detail, it should be noticed that a difference between the invention and prior art is the fact that the ice-cream preparation occurs in a continuous succession of phases, with immediate dispensing immediately after preparation. In fact, while the known machines comprise cooling trays in which to temporarily maintain the prepared ice-cream in a preliminary phase, the invention prepares the ice-cream when needed and then dispenses it instantly.

To be sure the branches 13, 14, 15, 16 of the circuit 3 cooperate individually with the respective compartment 11, 12 of the capsule 2, the shape of the seat and that of the capsule 2 can be chosen in such a way that, once the former has been fitted in the latter, the compartments 11, 12 are arranged in fluid-dynamic communication with a respective branch of the circuit 3.

For example, the shape of the seat can be complementary to that of the capsule 2; i.e., if the capsule 2 has a parallelepiped shape like that shown in figure 2, then the seat (or housing) can be parallelepiped.

To avoid the capsule 2 being badly positioned inside the seat, i.e., with the compartments 11, 12 and branches 13, 14, 15, 16 unmatched, which would cause a machine malfunction, the capsule 2 can be provided with an orientation associated with a corresponding orientation of the seat.

Preferably, the compartments 11, 12 are arranged side by side along a direction of orientation D, which is associated with the shape of the capsule 2; this implies that the branches 13, 14, 15, 16 of the circuit 3 are placed alongside one another in the same way.

In the case shown, the direction of orientation D corresponds to the axis of the capsule 2, i.e., to the direction of its length.

Other ways of defining the orientation of the capsule 2 cannot however be ruled out.

In order to avoid the user fitting the capsule 2 in the seat with a wrong orientation, the above inlet 6 for the capsule 2 can have a section or profile such as to make it obligatory to fit it in the correct orientation.

In the case shown in the figures, fitting is only possible if the direction of orientation D of the capsule 2 is parallel to the length of the inlet 6.

More specifically, the inlet 6 has a rectangular shape that corresponds to the profile of a long side wall of the capsule 2 (but this clearly varies according to the shape of the capsule 2).

In the preferred embodiment of the invention, the preparation branches 13, 14, 15, 16 are each defined by a first semi-branch 13, 14, arranged upstream of the seat, provided to supply water (and if necessary gas) to the capsule 2 fitted in the seat, and a second semi-branch 15, 16, arranged downstream of the seat and provided to enable the mix to come out of the seat.

In this case, each semi-branch 13, 14, 15, 16 will have a mouth of communication with the seat.

In practice, the presence of the seat defines the aforementioned semi-branches 13, 14, 15, 16, positioning itself between them and making up their connection. The invention comprises a cooling station R, crossed by the circuit 3, in which cooling means 41 are comprised to cool a fluid flowing within the circuit 3.

In the preferred embodiment of the invention, the cooling station R is arranged downstream of the mixing station M, so as to avoid even the smallest risk of clots forming in the ice-cream.

In this case, the cooling means 41, which can be defined by a heat exchanger or the like, lower the temperature of the mix that flows in the circuit 3 so as to form the ice-cream.

The case cannot be ruled out wherein the cooling station R is arranged in a different position along the circuit 3; in this case, the cooled fluid may not be the mix.

The soft ice-cream is obtained at negative temperature, normally between - 3° C and - 5° C, e.g., around - 4° C, but obviously the exact temperature is chosen according to the best efficiency according to the type of product to be dispensed, to the preparation, to the reciprocal position of the stations of the machine 1 and to their dimensional specifications, etc..

In the case of the simultaneous preparation of ice-cream in several flavours, the cooling station R is crossed by the above-mentioned second semi-branches, preferably served by the same cooling means 41.

The proposed machine 1 then includes a dispensing station E which comprises at least an outlet 18, 19, 20 of the circuit 3, able to dispense the ice-cream.

In the event of the circuit 3 including several preparation branches 13, 14, 15, 16, then the circuit 3 can comprise a plurality of outlets, among which at least an outlet 18, 19, 20 for each of said branches 13, 14, 15, 16.

In detail, preferably, there will be both an outlet for each flavour and an outlet for dispensing ice-cream with two flavours, three flavours, etc...

The number of outlets can be determined by a particular solution of the invention explained, together with further structural details, following the description of the operation of machine 1 expounded hereunder.

When the user wants to prepare an ice-cream, he/she chooses between a multiplicity of flavours made available by an equal number of capsules 2 containing the relative preparations.

After which, he/she fits the chosen capsule 2 in the aforementioned inlet 6, so this is positioned in the seat, e.g., by gravity or some other way.

At this point, the user starts the operation of the circuit 3 by means of the aforementioned interfacing means 7.

This results in the water which has entered in the access 5 of the circuit 3 being conveyed by the pump 32 towards its mixing station M, if necessary following the introduction of air or other gas inside the circuit 3 itself.

In the mixing station M, the fluid which flows in the circuit 3 has access to the preparation contained in the capsule 2 after the breaking of its walls by means of the perforation means 40, whereby the aforementioned mix is obtained.

This is then made to pass through the cooling station R where it is transformed into ice-cream which is then dispensed outside the machine 1, e.g., in a cup 21.

Immediately after this first dispensing operation, the same or another user can prepare another ice-cream, choosing the flavour at the time, by simply repeating the operations explained above, in an indefinite number of cycles.

Consequently, it is evident that the invention, unlike all known machines, is not only the only machine 1 really usable for home use, but it is also able to achieve a degree of satisfaction unimaginable using known machines, which can dispense ice-cream in two or at most three flavours.

To understand the possibilities provided by the invention in the home, consider a child's birthday party, staged in the child's house, during which twenty school mates and their parents can each be provided with a different flavoured ice-cream, or ice-creams with two different flavours.

The capsules 2 used can be unloaded from time to time into a removable container provided for the purpose in the machine 1 or be removed manually following each dispensing operation, e.g., in the case of the aforementioned removable portion of the machine 1 being provided.

The machine 1 can then comprise means for dispensing dressings for the dispensed ice-cream, such as toppings consisting of creams, syrups or grains, etc.

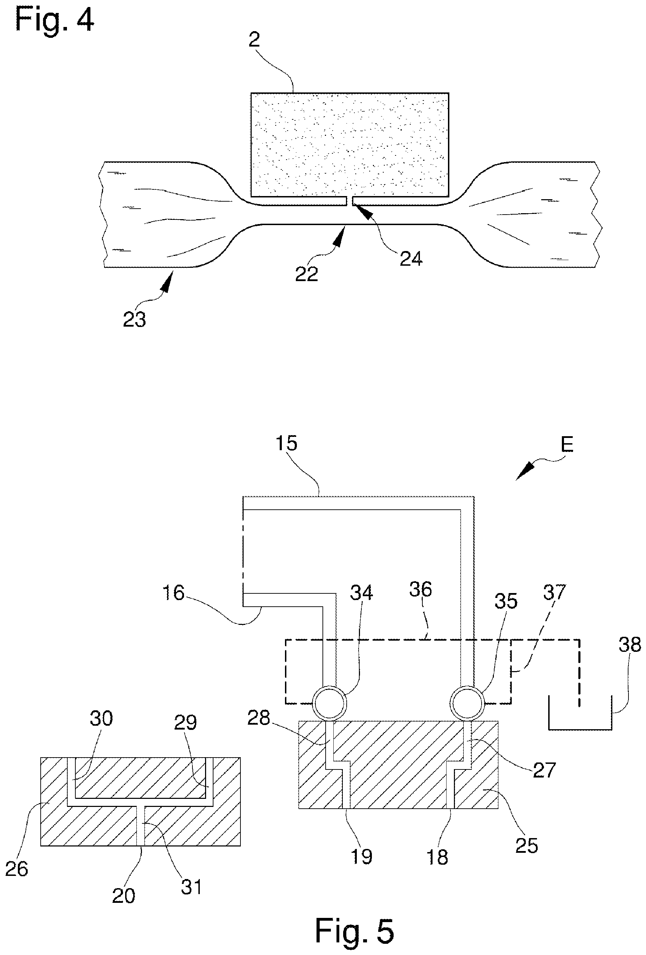

In a particular embodiment of the invention, mention of which was previously made, the mix of preparation contained in the capsules 2 and water (if necessary with gas) is obtained by means of a solution that exploits the Venturi effect, shown schematically in figure 4, wherein the realistic proportions between capsule 2 and circuit 3 are not necessarily complied with, for reasons of clarity of representation.

In this embodiment, the seat for receiving the capsule 2 is not arranged integrated in the preparation branches 13, 14, 15, 16 and is not in any case crossed by them.

The seat, in this case, is arranged alongside a mixing section or length 22 of the circuit 3 (meaning by "section" a longitudinal portion) which passes through the mixing station.

In this embodiment as well, the mixing station M can also comprise the aforementioned preparation branches 13, 14, 15, 16, so as to simultaneously produce several doses of ice-cream with different flavours, even though such branches 13, 14, 15, 16, in this case, are not split into semi-branches.

In correspondence to the mixing section, the duct/s 23 of the circuit 3, however made, comprises/comprise a contracture, i.e., an area with reduced transversal section, for the purpose of speeding up the fluid passing through it.

A fluid-dynamic connection 24 is also provided comprising e.g. one or more tubular portions, able to place in communication the inside of the capsule 2 arranged in the seat and the mixing length, so that, due to Venturi effect, the preparation contained in the capsule 2 is attracted inside the circuit 3.

In this case, the mixing and dissolving of the preparation in water to form the mix occurs completely inside the ducts 23 of the circuit 3, during the transport of the fluid towards the cooling station R, if arranged downstream of the mixing station, and in any case towards the dispensing station.

The machine 1 can envisage two cleaning solutions.

First of all, a system is provided for cleaning the circuit 3 from any residues of sugary substances or the like, included in the preparations, which could build up in the ducts of the circuit 3 itself.

For this purpose, heating means 33 can be provided, able to heat the fluid which flows in said circuit 3, which are preferably arranged before the mixing station M, e.g., in the supply station A, or between this and the mixing station.

The heating means 33 can comprise resistors or other means suitable for the purpose, and be subject to the above-mentioned control logic.

In practice, the proposed machine 1 periodically undergoes cleaning cycles wherein the water coming from the tank 39 or other source is heated and made to pass along the circuit 3, in the absence of the capsule 2 or at most with the presence of special capsules 2 containing cleaning substances.

Preferably, as schematically shown in figure 5, in the dispensing station, upstream of each dispensing outlet 18, 19, 20, a drain branching 36, 37 is present which ends up in a drain 38, e.g., in the form of a dirty water tank, etc.. In this case, in correspondence to branching points, a relative valve 34, 35 is provided to direct the fluid alternatively to the respective outlet 18, 19, 20 or to the above-mentioned drain branching 36, 37.

Another optional cleaning solution, which can be provided in the dispensing station, is to make available a removable terminal element 25, 26 wherein is obtained the outlet 18, 19, 20 or the outlets of the circuit 3 (see figure 5).

In practice, the terminal element 25, in one of its first versions, can comprise a plurality of outlets 18, 19, each fluid-dynamically connected to the distal extremity of respective branches 13, 14, 15, 16 of the circuit 3, e.g., by means of specific distinct inner ducts 27, 28.

In this case, the machine 1 dispenses several ice-cream doses at the same time.

The terminal element 25 can be removed and washed manually, between two consecutive dispensing operations, so as to remove the ice-cream residues from the first dispensing operation, so that these do not mix with those of the ice-cream of the subsequent dispensing operation.

The terminal elements 25, 26 can be provided in different configurations and in this case they are interchangeable.

In fact, another type of terminal element 26 acts as a mixer to obtain ice-cream with two flavours (or three flavours, etc..).

This type of terminal element 26 can have two inner ducts 29, 30 connected to the extremities of the branches 13, 14, 15, 16 of the circuit 3, which join in a single duct 31 which terminates in the dispensing outlet 20.

At any rate, in each of the possible embodiments of the invention, in correspondence to the dispensing outlets, dispensing nozzles can be provided with a particular shape, e.g., star shape, to create a particular shape of the ice-cream extrusion coming out of the proposed machine.

It has in practice been ascertained how the described invention achieves the proposed objects and in particular the fact is underlined that it makes available a machine 1 and a capsule 2 for the preparation and dispensing of express ice-cream, the flavour of which can change at each dispensing operation, thanks to the multiplicity of preparations present on the market, which machine 1 can be used in ice-cream parlours, cafés, fun parks, but also, advantageously, in the home.

## Claims

1. Machine (1) for the preparation and dispensing of ice-cream or similar foodstuffs, comprising a fluid-dynamic circuit (3) that passes through a supply station (A), in which the circuit (3) has an access (5) for water, and comprising, downstream of said supply station (A):
- a mixing station (M), in which there is at least a receiving seat to receive a capsule (2) containing one or more doses of soluble preparation for ice-cream, said seat being able to be placed in communication with the circuit (3);
- a cooling station (R), crossed by said circuit (3), in which cooling means (41) are comprised to cool a fluid flowing within said circuit (3); and
- a dispensing station, which comprises at least an outlet (18, 19, 20) of said circuit (3) able to dispense said ice-cream;
**characterized by** the fact that:
- said circuit (3) comprises a pump (32) arranged downstream of said access (5) to move said fluid that flows in said circuit (3), the water entering in said access (5) of the circuit (3) being conveyed by said pump (32) towards said mixing station (M); and
- said machine (1) comprises perforation means (40) able to break the walls of said capsule (2) received in said seat, the breaking of said capsule (2) placing in communication the inside of said capsule (2), where the preparation is, with said fluid flowing in said circuit (3), creating a mix of said fluid and said preparation.

2. Machine (1) according to claim 1, **characterized by** the fact that said seat is accessible from the outside of said machine (1).

3. Machine (1) according to one or more of the preceding claims, **characterized by** the fact that said circuit (3) comprises, upstream of said outlet (18, 19, 20), a drain branching (36, 37) ending up in a drain (38) and a valve (34, 35) to direct the fluid crossing said circuit (3) to said outlet (18, 19, 20) or alternatively to said drain branching (36, 37).

4. Machine (1) according to one or more of the preceding claims, **characterized by** the fact that said circuit (3) comprises a plurality of branches (13, 14, 15, 16) arranged in said mixing station (M) and able to communicate with a respective compartment (11, 12) of said capsule (2) fitted in said seat.

5. Machine (1) according to claim 4, **characterized by** the fact that it comprises a plurality of said outlets (18, 19, 20), among which at least an outlet (18, 19) for each of said branches (13, 14, 15, 16).

6. Machine (1) according to one or more of the preceding claims, **characterized by** the fact that said circuit (3) comprises an inlet (9) for a gas.

7. Machine (1) according to one or more of the preceding claims, **characterized by** the fact that said cooling station (R) is arranged downstream of said mixing station (M).

8. Machine (1) according to one or more of the preceding claims, **characterized by** the fact that it comprises heating means (33), able to heat a fluid which flows in said circuit (3).

9. Machine (1) according to one or more of the preceding claims, **characterized by** the fact that said circuit (3) comprises a mixing length (22) with a reduced transversal section, and a fluid-dynamic connection (24) able to place in communication the inside of said capsule (2), received in said seat, with said mixing length (22), so as to transport said preparation from the first to the second due to Venturi effect.

## Patentansprüche

1. Maschine (1) für die Zubereitung und Ausgabe von Speiseeis oder ähnlichen Nahrungsmitteln, mit einem fluiddynamischen Kreislauf (3), der eine Versorgungsstation (A) durchläuft, in der der Kreislauf (3) einen Zugang (5) für Wasser aufweist, und umfassend stromabwärts der Versorgungsstation (A):
- eine Mischstation (M), in der sich mindestens ein Aufnahmesitz zur Aufnahme einer Kapsel (2) befindet, die eine oder mehrere Dosen einer löslichen Zubereitung für Speiseeis enthält, wobei dieser Sitz mit dem Kreislauf (3) in Verbindung gebracht werden kann;
- eine Kühlstation (R), die von dem Kreislauf (3) durchquert wird, in der Kühlmittel (41) enthalten sind, um ein in dem Kreislauf (3) strömendes Fluid zu kühlen; und
- eine Abgabestation, die mindestens einen Auslass (18, 19, 20) des Kreislaufs (3) umfasst, der in der Lage ist, das Speiseeis abzugeben;
**dadurch gekennzeichnet, dass**:
- der Kreislauf (3) eine Pumpe (32) aufweist, die stromabwärts des Zugangs (5) angeordnet ist, um das Fluid zu bewegen, das in dem Kreislauf (3) fließt, wobei das in den Zugang (5) des Kreislaufs (3) eintretende Wasser durch die Pumpe (32) zu der Mischstation (M) gefördert wird; und
- die Maschine (1) Perforationsmittel (40) umfasst, die in der Lage sind, die Wände der in dem Sitz aufgenommenen Kapsel (2) zu zerbrechen, wobei das Zerbrechen der Kapsel (2) das Innere der Kapsel (2), in dem die Zubereitung ist, in Verbindung setzt mit dem Fluid, das in dem Kreislauf (3) fließt und eine Mischung des Fluids und der Zubereitung erzeugt.

2. Maschine (1) nach Anspruch 1, **dadurch gekennzeichnet, dass** der Sitz von der Außenseite der Maschine (1) zugänglich ist.

3. Maschine (1) nach einem oder mehreren der vorstehenden Ansprüche, **dadurch gekennzeichnet, dass** der Kreislauf (3) stromaufwärts des Auslasses (18, 19, 20) eine Abflussverzweigung (36, 37) umfasst, die in einem Abfluss (38) endet, und ein Ventil (34, 35), um das den Kreislauf (3) durchquerende Fluid zu dem Auslass (18, 19, 20) oder alternativ zu der Abflussverzweigung (36, 37) zu leiten.

4. Maschine (1) nach einem oder mehreren der vorhergehenden Ansprüche, **dadurch gekennzeichnet, dass** der Kreislauf (3) eine Vielzahl von Abzweigungen (13, 14, 15, 16) umfasst, die in der Mischstation (M) angeordnet sind und mit einem entsprechenden Abteil (11, 12) der in den Sitz eingebauten Kapsel (2) kommunizieren können.

5. Maschine (1) nach Anspruch 4, **dadurch gekennzeichnet, dass** sie eine Vielzahl der Auslässe (18, 19, 20) umfasst, darunter mindestens einen Auslass (18, 19) für jeden der Abzweigungen (13, 14, 15, 16).

6. Maschine (1) nach einem oder mehreren der vorstehenden Ansprüche, **dadurch gekennzeichnet, dass** der Kreislauf (3) einen Einlass (9) für ein Gas aufweist.

7. Maschine (1) nach einem oder mehreren der vorstehenden Ansprüche, **dadurch gekennzeichnet, dass** die Kühlstation (R) stromabwärts der Mischstation (M) angeordnet ist.

8. Maschine (1) nach einem oder mehreren der vorstehenden Ansprüche, **dadurch gekennzeichnet, dass** sie Heizmittel (33) umfasst, die in der Lage sind, ein Fluid zu erwärmen, das in dem Kreislauf (3) fließt.

9. Maschine (1) nach einem oder mehreren der vorhergehenden Ansprüche, **dadurch gekennzeichnet, dass** der Kreislauf (3) eine Mischstrecke (22) mit einem reduzierten Querschnitt und eine fluiddynamische Verbindung (24) umfasst, die in der Lage ist, das Innere der in dem Sitz aufgenommenen Kapsel (2) mit der Mischstrecke (22) in Verbindung zu bringen, um die Zubereitung aufgrund des Venturi-Effekts von der ersten zur zweiten zu transportieren.

## Revendications

1. Machine (1) pour la préparation et la distribution de crème glacée ou de produits alimentaires similaires, comprenant un circuit dynamique de fluide (3) qui traverse une station d'alimentation (A), dans laquelle le circuit (3) possède un accès (5) pour de l'eau, et comprenant, en aval de ladite station d'alimentation (A) :
- une station de mélange (M), dans laquelle se trouve au moins un logement de réception pour recevoir une capsule (2) contenant une ou plusieurs doses de préparation soluble pour crème glacée, ledit logement étant apte à être placé en communication avec le circuit (3) ;
- une station de refroidissement (R), traversée par ledit circuit (3), dans laquelle des moyens de refroidissement (41) sont compris pour refroidir un fluide s'écoulant à l'intérieur dudit circuit (3) ; et
- une station de distribution, qui comprend au moins une sortie (18, 19, 20) dudit circuit (3) apte à distribuer ladite crème glacée ;
**caractérisée par le fait que** :
- ledit circuit (3) comprend une pompe (32) agencée en aval dudit accès (5) pour déplacer ledit fluide qui s'écoule dans ledit circuit (3), l'eau entrant dans ledit accès (5) du circuit (3) étant acheminée par ladite pompe (32) en direction de ladite station de mélange (M) ; et
- ladite machine (1) comprend des moyens de perforation (40) aptes à rompre les parois de ladite capsule (2) reçue dans ledit logement, la rupture de ladite capsule (2) mettant en communication l'intérieur de ladite capsule (2), où se trouve la préparation, avec ledit fluide s'écoulant dans ledit circuit (3), créant un mélange dudit fluide et de ladite préparation.

2. Machine (1) selon la revendication 1, **caractérisée par le fait que** ledit logement est accessible depuis l'extérieur de ladite machine (1).

3. Machine (1) selon une ou plusieurs des revendications précédentes, **caractérisée par le fait que** ledit circuit (3) comprend, en amont de ladite sortie (18, 19, 20), un branchement de drain (36, 37) se terminant dans un drain (38) et une soupape (34, 35) pour diriger le fluide traversant ledit circuit (3) vers ladite sortie (18, 19, 20) ou en variante vers ledit branchement de drain (36, 37).

4. Machine (1) selon une ou plusieurs des revendications précédentes, **caractérisée par le fait que** ledit circuit (3) comprend une pluralité de branches (13, 14, 15, 16) agencées dans ladite station de mélange (M) et aptes à communiquer avec un compartiment respectif (11, 12) de ladite capsule (2) placée dans ledit logement.

5. Machine (1) selon la revendication 4, **caractérisée par le fait qu'**elle comprend une pluralité desdites sorties (18, 19, 20), parmi lesquelles au moins une sortie (18, 19) pour chacune desdites branches (13, 14, 15, 16).

6. Machine (1) selon une ou plusieurs des revendications précédentes, **caractérisée par le fait que** ledit circuit (3) comprend une entrée (9) pour un gaz.

7. Machine (1) selon une ou plusieurs des revendications précédentes, **caractérisée par le fait que** ladite station de refroidissement (R) est agencée en aval de ladite station de mélange (M).

8. Machine (1) selon une ou plusieurs des revendications précédentes, **caractérisée par le fait qu'**elle comprend des moyens de chauffage (33), aptes à chauffer un fluide qui s'écoule dans ledit circuit (3).

9. Machine (1) selon une ou plusieurs des revendications précédentes, **caractérisée par le fait que** ledit circuit (3) comprend une longueur de mélange (22) ayant une section transversale réduite, et un raccord dynamique de fluide (24) apte à mettre en communication l'intérieur de ladite capsule (2), reçue dans ledit logement, avec ladite longueur de mélange (22), de façon à transporter ladite préparation de la première à la seconde grâce à un effet Venturi.
